# EUROPÄISCHE PATENTANMELDUNG

(11) **EP 4 604 346 A1**
(43) Veröffentlichungstag der Anmeldung: **20.08.2025**
(21) Anmeldenummer: 25158344.9
(22) Anmeldetag: 17.02.2025
(51) Int. Cl.: H02J 3/00, H02J 3/38, H02J 3/46

(54) **VERFAHREN ZUR DYNAMISIERUNG EINES SCHUTZ-MITNAHME-SYSTEMS**

(30) Priorität: 16.02.2024 DE 102024104369
(71) Anmelder: Schleswig-Holstein Netz GmbH, 25451 Quickborn (DE)
(72) Erfinder: Brüning, Thore, 25451 Quickborn (DE); Gerbaulet, Clemens, 25451 Quickborn (DE); Kröger, Dr. Erik, 25451 Quickborn (DE); Kroggel, Alexander, 25451 Quickborn (DE); Pies, Philip, 25451 Quickborn (DE); Rudolph, Matthias, 25451 Quickborn (DE)
(74) Vertreter: Bals & Vogel Patentanwälte PartGmbB

(57) **Zusammenfassung**

Die Erfindung betrifft ein Verfahren zum Betreiben eines elektrischen Versorgungsnetzes (1000), aufweisend
- Erfassen (110), insbesondere durch ein Netzleitsystem (200), zumindest eines überwachten Betriebsmittels (10), zumindest eines abzusichernden Betriebsmittels (20) und zumindest eines Einspeisers (100), wobei der zumindest eine Einspeiser (100) mit dem zumindest einen abzusichernden Betriebsmittel (20) verbunden ist,
- Bestimmen (120), insbesondere durch das Netzleitsystem (200), zumindest eines Parameters (Par) des zumindest einen Einspeisers (100),
- Erstellen (130), insbesondere durch das Netzleitsystem (200), einer Entlastungsmatrix (EM) für das zumindest eine abzusichernde Betriebsmittel (20), in Abhängigkeit von dem zumindest einen Parameter (Par),
- Betreiben (140) des zumindest einen Einspeisers (100) in Abhängigkeit von der Entlastungsmatrix (EM).

## Beschreibung

Die Erfindung betrifft ein Verfahren mit den Merkmalen des unabhängigen Verfahrensanspruchs, ein Computerprogrammprodukt mit den Merkmalen des unabhängigen Patentanspruchs betreffend ein Computerprogrammprodukt, einen computerlesbaren Datenträger mit den Merkmalen des unabhängigen Patentanspruchs betreffend einen computerlesbaren Datenträger, eine Steuereinheit mit den Merkmalen des unabhängigen Patentanspruchs betreffend eine Steuereinheit, ein Netzleitsystem mit den Merkmalen des unabhängigen Patentanspruchs betreffend ein Netzleitsystem sowie ein elektrisches Versorgungsnetz mit den Merkmalen des unabhängigen Patentanspruchs betreffend ein elektrisches Versorgungsnetz.

Bekannt sind elektrische Versorgungsnetze umfassend (elektrische) Verteilnetze und/oder Übertragungsnetze. Dabei kann an ein Verteilnetz zumindest ein (elektrischer) Einspeiser, z. B. ein Windkraftwerk und/oder eine Solaranlage, angeschlossen sein, wobei der Einspeiser eine elektrische Leistung, insbesondere eine elektrische Spannung und einen Strom, an das Verteilnetz (bzw. das elektrische Versorgungsnetz) bereitstellt. Ein Windkraftwerk ist auch unter dem Begriff Windkraftanlage bekannt. Dabei können zumindest zwei oder eine Vielzahl an Einspeisern mit einem Verteilnetz verbunden sein. Zudem umfasst ein Verteilnetz zumindest ein, vorzugsweise zwei oder mehr (bzw. eine Vielzahl an), Betriebsmittel(n), z. B. aufweisend einen Transformator, eine Umspannvorrichtung et cetera. Sofern keine Fehlerfälle, z. B. Defekte und/oder Ausfälle, auftreten, kann ein derartiges Verteilnetz und/oder elektrisches Versorgungsnetz stabil Strom liefern, z. B. an daran angeschlossene weitere Netze. Tritt allerdings ein Fehlerfall ein, kann dies zu einer anderen Verteilung der Leistung bzw. von Leistungsflüssen kommen. Dies kann beispielsweise zu Schäden an einem Betriebsmittel führen. Ein Verteilnetz kann dabei nach dem (n-1) Prinzip betrieben werden. Dies kann umfassen, dass beim Ausfall eines einzelnen beliebigen Betriebsmittels im Verteilnetz weiterhin ein Netzbetrieb ohne Versorgungsunterbrechung gewährleistet ist. Erstens kann dies verhindert werden, indem eine potenzielle Überbelastung durch eine (präventive) Veränderung eines Parameters, z. B. eine Reduktion der Leistung, eines Betriebsmittels und/oder eines Einspeisers verhindert wird. Zweitens kann dies verhindert werden, indem beim Eintreten und/oder (kurz) nach einem Fehlerfall eine (kurative) Veränderung eines Parameters, z.B. eine Reduktion der Leistung, durchgeführt wird.

Der Stand der Technik weist dabei Nachteile auf. Eine präventive Veränderung bzw. Reduktion kann zu einer unnötig geringen Leistung führen. Demnach kann das Leistungspotential nicht oder nicht vollständig ausgenutzt werden. Dies kann zu Stromengpässen führen und/oder zu nicht genutzter Leistung, was insbesondere Kosten und/oder Verschleiß erzeugen kann. Eine kurative Veränderung bzw. Reduktion kann einen unzureichenden Schutz des Betriebsmittels und/oder des Einspeisers aufweisen, insbesondere aufgrund eines zu späten Umsetzens. Weiterhin können bekannte Systeme und/oder Verfahren statische Veränderungen von Parametern, z. B. feste bzw. unveränderbare Leistungsreduktion aufweisen. Es kann auch vorgesehen sein, dass Anpassungen der Veränderungen nicht-dynamisch, (lediglich) händisch z. B. durch (qualifiziertes) Bedienpersonal, und/oder kompliziert umzusetzen sind. Beispielsweise kann eine Veränderung des Parameters eine Reduktion der Leistung eines Einspeisers um 50% umfassen. Dieser Wert kann fix sein. Eine Änderung des elektrischen Versorgungsnetzes, des Verteilnetzes, des Einspeisers und/oder des Betriebsmittels, kann eine (vollständige) Neuberechnung, insbesondere der gesamten elektrischen Verschaltung (z. B. Parametrisierung) und/oder der Veränderung des Parameters (z. B. notwendige Leistungsreduktion jetzt um 60%), benötigen. Demnach sind bekannte Lösungen unflexibel, aufwendig, zeitintensiv und/oder kostenintensiv.

Es ist daher eine Aufgabe der vorliegenden Erfindung, wenigstens einen der voranstehend beschriebenen Nachteile zumindest teilweise zu überwinden. Insbesondere ist es Aufgabe der Erfindung ein verbessertes Verfahren bereitzustellen, welches die Sicherheit und/oder Leistungsausbeute erhöht bzw. optimiert. Es kann zudem eine Aufgabe sein ein kostengünstigeres, schnelleres, zuverlässigeres, besser automatisiertes, einfacheres, (dynamisch) anpassungsfähigeres und/oder robusteres Verfahren bereitzustellen.

Die voranstehende Aufgabe wird gelöst durch ein Verfahren mit den Merkmalen des unabhängigen Verfahrensanspruchs, ein Computerprogrammprodukt mit den Merkmalen des unabhängigen Patentanspruchs betreffend ein Computerprogrammprodukt, einen computerlesbaren Datenträger mit den Merkmalen des unabhängigen Patentanspruchs betreffend einen computerlesbaren Datenträger, eine Steuereinheit mit den Merkmalen des unabhängigen Patentanspruchs betreffend eine Steuereinheit, ein Netzleitsystem mit den Merkmalen des unabhängigen Patentanspruchs betreffend ein Netzleitsystem sowie ein elektrisches Versorgungsnetz mit den Merkmalen des unabhängigen Patentanspruchs betreffend ein elektrisches Versorgungsnetz. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Computerprogrammprodukt und/oder im Zusammenhang mit dem erfindungsgemäßen computerlesbaren Datenträger und/oder im Zusammenhang mit der erfindungsgemäßen Steuereinheit und/oder im Zusammenhang mit dem erfindungsgemäßen Netzleitsystem und/oder im Zusammenhang mit dem erfindungsgemäßen elektrischen Versorgungsnetz und jeweils umgekehrt, so dass bezüglich der Offenbarung zu den einzelnen Erfindungsaspekten stets wechselseitig Bezug genommen wird bzw. werden kann. Insbesondere gelten Vorteile, die im Rahmen des ersten, zweiten, dritten, vierten, fünften und/oder sechsten Aspekts beschrieben werden, auch jeweils für den ersten, zweiten, dritten, vierten, fünften und/oder sechsten Aspekt.

Die obenstehende Aufgabe wird gemäß einem ersten Aspekt gelöst durch ein Verfahren zum Betreiben eines elektrischen Versorgungsnetzes (insbesondere gemäß dem sechsten Aspekt), aufweisend
- Erfassen, insbesondere durch ein Netzleitsystem (insbesondere gemäß dem fünften Aspekt), zumindest eines überwachten Betriebsmittels, zumindest eines abzusichernden Betriebsmittels und zumindest eines Einspeisers, wobei der zumindest eine Einspeiser mit dem zumindest einen abzusichernden Betriebsmittel (elektrisch) verbunden ist,
- Bestimmen, insbesondere durch das Netzleitsystem, zumindest eines Parameters des zumindest einen Einspeisers,
- Erstellen, insbesondere durch das Netzleitsystem, einer Entlastungsmatrix für das zumindest eine abzusichernde Betriebsmittel, (insbesondere) in Abhängigkeit von dem zumindest einen Parameter,
- Betreiben, insbesondere durch das Netzleitsystem, des zumindest einen Einspeisers in Abhängigkeit von der Entlastungsmatrix.

Das Verfahren kann dabei computer-implementiert sein. Das Verfahren kann dabei (zumindest teilweise und/oder soweit sinnvoll) in Software (insbesondere nicht-physisch) implementiert sein. Vorzugsweise werden die Verfahrensschritte in der dargestellten Reihenfolge durchgeführt. Es kann vorgesehen sein, die Reihenfolge zu ändern, insbesondere sofern technisch sinnvoll. Weiterhin kann es vorgesehen sein, das Verfahren wiederholt und/oder kontinuierlich durchzuführen, vorzugsweise im Rahmen einer Veränderung und/oder Anpassung des elektrischen Versorgungsnetzes und/oder Verteilnetzes, beispielsweise bei einem Hinzufügen weiterer Einspeiser und/oder Betriebsmittel, wobei vorzugsweise eine (dynamische) Anpassung der Entlastungsmatrix durchgeführt werden kann. Vorzugsweise kann das Verfahren, das Netzleitsystem und/oder das elektrische Versorgungsnetz dazu eingerichtet sein, die erfindungsgemäßen Vorteile zu realisieren, und insbesondere ein kostengünstigeres, schnelleres, zuverlässigeres, besser automatisiertes, einfacheres, (dynamisch) anpassungsfähigeres und/oder robusteres Verfahren, vorzugsweise für einen Fehlerfall bzw. zur Prävention bereitzustellen. Insbesondere kann das Verfahren für ein Schutz-Mitnahme-System und/oder Verfahren eingerichtet sein. Beispielsweise um eine schnellere Umsetzung einer Entlastungsmatrix zu ermöglichen.

Vorzugsweise handelt es sich um ein elektrisches Netzleitsystem, ein elektrisches Betriebsmittel und/oder einen elektrischen Einspeiser, z. B. ein Windkraftwerk, Solarkraftwerk, oder andersartiges Kraftwerk. Ein Solarkraftwerk kann beispielsweise eine Solaranlage umfassen. Dabei können die Bestandteile miteinander verbindbar bzw. verbunden sein, insbesondere durch eine elektrische und/oder datenkommunizierende Verbindung. Das Netzleitsystem kann dabei eine Steuereinheit aufweisen, als eine Steuereinheit funktionieren und/oder eine Steuereinheit sein. Mit anderen Worten kann das Netzleitsystem und/oder eine Steuereinheit als (zentrale) Steuerungsvorrichtung ("Gehirn") fungieren. Vorzugsweise kann das Netzleitsystem dabei über eine (Daten-) Verbindung, insbesondere datenkommunizierend mit dem Verteilnetz, dem zumindest einen Einspeiser, dem zumindest einen Sensor, dem zumindest einen (überwachten und/oder abzusichernden) Betriebsmittel, der zumindest einen Feldtechnikvorrichtung, weiteren Einspeisern und/oder weiteren (überwachten und/oder abzusichernden) Betriebsmittel verbunden sein, vorzugsweise um (Mess-) Daten von diesen zu empfangen, Daten (wie z. B. eine Entlastungsmatrix) an diese zu übertragen und/oder diese (z. B. durch ein jeweiliges Steuersignal) anzusteuern. Das Netzleitsystem kann in dem elektrischen Versorgungsnetz umfasst sein, in diesem angeordnet sein und/oder mit diesem (elektrisch und/oder datenkommunizierend) verbunden sein. Das Netzleitsystem kann ein Netzberechnungssystem und/oder ein (insbesondere an das Netzleitsystem angeschlossenes) Assistenzsystem umfassen.

Das zumindest eine Betriebsmittel kann dabei ein überwachtes Betriebsmittel und/oder ein abzusicherndes Betriebsmittel aufweisen. Im Rahmen der Erfindung kann ein Betriebsmittel ein überwachtes und/oder abzusicherndes Betriebsmittel aufweisen. Beispielsweise kann ein abzusicherndes Betriebsmittel zugleich ein überwachtes Betriebsmittel sein, oder nicht. Beispielsweise kann ein überwachtes Betriebsmittel zugleich ein abzusicherndes Betriebsmittel sein, oder nicht. Sofern im Rahmen der Erfindung von einem "Betriebsmittel" gesprochen wird, kann dies (im Zweifel) ein überwachtes Betriebsmittel und/oder ein abzusicherndes Betriebsmittel umfassen. Ein (überwachtes und/oder abzusicherndes) Betriebsmittel kann dabei mit zumindest einem, insbesondere mehreren, Einspeiser(n) verbunden sein, welcher eine (elektrische) Leistung, insbesondere Einspeiseleistung, an das Betriebsmittel bereitstellt. Ein (überwachtes und/oder abzusicherndes) Betriebsmittel kann dabei mit zumindest einem (anderen), insbesondere überwachten und/oder abzusicherndem Betriebsmittel verbunden sein. Durch eine Verbindung kann (jeweils) Leistung bzw. ein elektrischer Leistungsfluss erfolgen (bzw. übertragen werden), z. B. bevorzugt Wirkleistung, vorteilhafterweise Blindleistung, insbesondere Einspeiseleistung, und/oder Entlastungsleistung.

Das Erfassen kann dabei vorzugsweise ein Erfassen zumindest eines (oder mehrerer) überwachten /-r Betriebsmittels umfassen. Dabei kann, insbesondere bei einem Betreiben, ein (wiederholtes) Überwachen, vorzugsweise durch das Netzleitsystem und/oder eine Feldtechnikvorrichtung, des überwachten Betriebsmittels erfolgen. Beispielsweise kann dadurch ein Fehlerfall des überwachten Betriebsmittels und/oder des Einspeisers erkannt werden. Das Erfassen kann vorzugsweise ein Erfassen zumindest eines (oder mehrerer) Einspeiser(s) umfassen, z. B. einer Windkraftanlage. Das Erfassen kann besonders bevorzugt das Erfassen zumindest eines (oder mehrerer) abzusichernden Betriebsmittels umfassen, welches insbesondere in einem Fehlerfall geschützt werden soll bzw. muss, beispielsweise um einen Schaden an dem abzusichernden Betriebsmittel zu verhindern und/oder eine erneute Inbetriebnahme nicht zu gefährden. Dabei kann das abzusichernde Betriebsmittel eine Schutzschaltung aufweisen und/oder mit einer Feldtechnikvorrichtung (elektrisch und/oder datenkommunizierend) verbunden sein, welche vorzugsweise im Fehlerfall, z. B. durch Anwenden einer Entlastungsmatrix (z. B. durch ein Steuersignal), insbesondere einer (für das abzusichernde Betriebsmittel spezifischen) Entlastungsmaßnahme, das abzusichernde Betriebsmittel schützt. Ein Fehlerfall kann bevorzugt (unverzüglich) an das Netzleitsystem und/oder eine Feldtechnikvorrichtung, vorzugsweise an eine Feldtechnikvorrichtung eines abgesicherten Betriebsmittels, übermittelt werden. Das Erfassen kann dabei eine Netzzustandserfassung aufweisen. Eine Feldtechnikvorrichtung kann dabei ein Betriebsmittel, insbesondere über eine (elektrische) Verbindung und/oder Datenverbindung, ansteuern. Vorzugsweise kann eine Feldtechnikvorrichtung programmierbar und/oder automatisierbar eingerichtet sein. Dadurch kann eine Feldtechnikvorrichtung das Betreiben (zumindest teilweise) durchführen.

Der zumindest eine Einspeiser kann dabei eine Leistungseinheit aufweisen oder sein. Es kann demnach vorgesehen sein, den Begriff Leistungseinheit anstatt Einspeiser zu verwenden. Demnach kann der Einspeiser bzw. die Leistungseinheit eine Leistung bereitstellen und/oder einen Verbraucher aufweisen, welcher insbesondere als elektrische Last funktioniert. Dabei kann der zumindest eine Einspeiser mit dem zumindest einen abzusichernden Betriebsmittel verbunden sein. Der zumindest eine Einspeiser kann für eine Bereitstellung einer Einspeiseleistung eingerichtet sein. Dabei kann der zumindest eine Einspeiser eine Einspeiseleistung an das zumindest eine überwachte Betriebsmittel und/oder abzusichernde Betriebsmittel bereitstellen, beispielsweise kann ein Einspeiser mit einem Transformator verbunden sein, welcher die Einspeiseleistung, insbesondere vor einem Einspeisen in ein Verteilnetz, transformiert. Dabei kann eine direkte und/oder elektrische Verbindung vorgesehen sein. Demnach kann es vorgesehen sein, dass der Einspeiser und das Betriebsmittel nicht direkt miteinander verbunden sind. Besonders bevorzugt können der Einspeiser und das (abzusichernde) Betriebsmittel im gleichen Netz angeordnet sein und/oder aufeinander (elektrisch) wirken. Alternativ oder zusätzlich kann auch keine und/oder eine indirekte Verbindung vorgesehen sein. Beispielsweise kann eine Wechselwirkung zwischen dem zumindest einen Einspeiser und dem abzusichernden Betriebsmittel vorgesehen sein. Es kann demnach vorgesehen sein, dass diese nicht direkt verbunden sind. Es kann (stattdessen) vorgesehen sein, dass eine Wirkung bzw. Wechselwirkung über das Verteilnetz erfolgt. Ein einfaches Beispiel kann dabei ein abzusicherndes Betriebsmittel sein, welches aufgrund eines Fehlerfalls eines überwachten Betriebsmittels, eine zu hohe Leistung, z. B. Blindleistung und/oder Wirkleistung, aufnimmt bzw. aufnehmen muss.

Das Erfassen kann dabei händisch, insbesondere durch Bedienpersonal, erfolgen. Alternativ oder zusätzlich kann ein, zumindest teilweise, automatisches und/oder automatisiertes Erfassen erfolgen, vorzugsweise durch das Netzleitsystem. Das Erfassen kann dabei in Abhängigkeit und/oder im Rahmen einer Netzplanung und/oder Netzberechnung erfolgen. Dabei kann zumindest ein, zumindest zwei oder mehr, Betriebsmittel, zumindest ein Einspeiser und/oder zumindest eine Feldtechnikvorrichtung, insbesondere (jeweils) eines Verteilnetzes, vorgesehen sein, welche (jeweils) eine Datenverbindung (z. B. Internet, LAN, WLAN, NFC, und/oder Bluetooth oder ähnlicher Standard) zu dem Netzleitsystem aufweist, um eine (beidseitige) Datenkommunikation zu ermöglichen. Alternativ oder zusätzlich (z. B. als Redundanz) kann eine Datenkommunikation über eine entsprechende elektrische Verbindung erfolgen, z. B. durch Aufmodulieren. Das Netzleitsystem kann dazu eingerichtet sein, insbesondere automatisch, ein (neu) angeschlossenes bzw. (elektrisch) verbundenes Betriebsmittel, eine Feldtechnikvorrichtung und/oder einen Einspeiser zu erfassen, beispielsweise durch Erkennen eines Identifizierungsmerkmals (z. B. einer Nummer, einer ID, eines Codes etc.). Vorzugsweise kann das zumindest eine (überwachte und/oder abzusichernde) Betriebsmittel, die zumindest eine Feldtechnikvorrichtung und/oder der zumindest eine Einspeiser weitere Informationen und/oder Parameter, welche insbesondere (jeweils) spezifisch für diese (Vorgenannten) sind, an das Netzleitsystem übermitteln. Dies kann beispielsweise eine aktuelle Leistung, eine Nennleistung (bei normalem Betreiben), einen Grenzwert, insbesondere spezifisch für eine Leistung (z. B. für eine maximale Leistung, Blindleistung, Entlastungsleistung und/oder Wirkleistung), einen Temperaturgrenzwert, eine Sensitivität, eine Kühlleistung, eine elektrische Verbindung (bzw. Verbindungen), eine Datenverbindung (bzw. Datenverbindungen) und/oder einen Standort umfassen. Dadurch kann das Netzleitsystem ein Erfassen durchführen. Es kann vorgesehen sein, dass eine Vielzahl bzw. (ganze) Liste von überwachten Betriebsmitteln, eine Vielzahl bzw. (ganze) Liste von Einspeisern und/oder Vielzahl bzw. (ganze) Liste von abzusichernden Betriebsmitteln erfasst wird. Demnach kann auch ein komplexes Verteilnetz und/oder elektrisches Versorgungsnetz erfasst werden, um möglichst alle gefährdeten bzw. abzusichernden Betriebsmittel zu schützen.

Das Bestimmen kann durch das Netzleitsystem durchgeführt werden. Alternativ oder zusätzlich kann der zumindest eine Parameter an das Netzsystem übermittelt bzw. bereitgestellt werden. Der zumindest eine Parameter kann dabei bevorzugt für den zumindest einen Einspeiser spezifisch sein. Dabei kann ein (dafür eingerichteter) Sensor, insbesondere des zumindest einen Einspeisers, das Bestimmen durchführen, und anschließend den zumindest einen Parameter an das Netzleitsystem übertragen (z. B. über eine Datenverbindung). Dabei kann das Bestimmen ein Messen des zumindest einen Parameters aufweisen. Im einfachsten Fall kann der zumindest eine Parameter eine (elektrische) Leistung umfassen, z. B. eine (aktuell) an das zumindest eine überwachte Betriebsmittel bereitgestellte (Wirk-) Leistung. Der zumindest eine Parameter kann dabei bevorzugt für den zumindest einen Einspeiser und/oder ein Teil des zumindest einen Einspeisers spezifisch sein. Dabei kann der Einspeiser zumindest ein Teil, z. B. einen Transformator, aufweisen. Dabei kann der zumindest eine Parameter (auch) spezifisch sein für das zumindest eine Teil, z. B. eine Leistung des Transformators. Es kann bevorzugt vorgesehen sein, dass der zumindest eine Parameter, zumindest zwei oder mehr Parameter aufweist, beispielsweise eine Leistung, einen Leistungsfluss, und/oder eine Temperatur (siehe auch unten).

Das Erstellen (siehe unten) kann bevorzugt durch das Netzleitsystem durchgeführt werden, beispielsweise durch Simulation mit einer Netzberechnungssoftware. Dabei kann (primär) eine wirkende und/oder prognostizierte Einspeiseleistung der Einspeiser berechnet werden. Das Erstellen der Entlastungsmatrix kann dabei (zusätzlich oder alternativ) in Abhängigkeit von einer (gesamten) Netzzustandserfassung erfolgen, insbesondere umfassend Lasten und/oder Verbraucher. Zudem kann eine Sensitivität dieser (der Einspeiser) auf die abzusichernden Betriebsmittel, vorzugsweise in Abhängigkeit von einer Ausfallvariante, berechnet werden. Das Erstellen kann dabei ein Berechnen und/oder Simulieren des elektrischen Versorgungsnetzes und/oder des Verteilnetzes umfassen. Dabei, insbesondere in Abhängigkeit davon, kann eine Entlastungsmatrix erstellt werden. Das Erstellen kann dabei in Abhängigkeit von dem zumindest einen Parameter und/oder (technischen) Informationen erfolgen, insbesondere Parametern, die spezifisch sind für den zumindest einen Einspeiser, das zumindest eine überwachte Betriebsmittel und/oder das zumindest eine abzusichernde Betriebsmittel. Dies kann beispielsweise Spezifikationen, Toleranzen, (technische) Grenzwerte, z. B. Leistungsgrenzwerte (siehe unten), und/oder Parametrisierung(en) umfassen. Das Erstellen kann dabei ein Berechnen von (allen) Lastflüssen bzw. Leistungsflüssen umfassen. Weiterhin kann für eine, mehrere und/oder alle möglichen Ausfallvarianten (siehe unten) eine Ausfallvariantenberechnung durchgeführt werden. Dabei können (unterschiedliche und/oder mögliche) Fehlerfälle parametrisiert, durchgespielt und/oder im Vorfeld berechnet werden. Die Entlastungsmatrix ist bevorzugt spezifisch für das zumindest eine abzusichernde Betriebsmittel und/oder eingerichtet, um dieses (im Fehlerfall) zu schützen. Eine Entlastungsmatrix kann dabei spezifisch sein für zumindest einen Fehlerfall oder (bevorzugt) für eine Vielzahl von Fehlerfällen (z. B. Fehlerfall bzw. Ausfall von mehreren / unterschiedlichen überwachten Betriebsmitteln, vorzugsweise in unterschiedlichen bzw. allen möglichen Konstellationen). Mit anderen Worten kann eine Entlastungsmatrix eine Information und/oder eine (bzw. viele) Entlastungsmaßnahme(n) (bzw. Handlungsanweisung) umfassen. Dabei kann in einem Fehlerfall, das zumindest eine abzusichernde Betriebsmittel in Abhängigkeit von der Entlastungsmatrix geschützt werden. Beispielsweise kann im einfachsten Fall die Entlastungsmatrix, insbesondere eine Entlastungsmaßnahme, eine Leistungsreduktion des zumindest einen Einspeisers umfassen, welche bevorzugt dazu eingerichtet ist, dass zumindest eine abzusichernde Betriebsmittel zu schützen, z. B. vor einer Überlastung im Fehlerfall. Die Entlastungsmatrix, insbesondere eine (bzw. jede) Entlastungshandlung, kann dabei zumindest einen (bzw. eine Vielzahl von) Schaltzustand /zuständen aufweisen, z. B. des zumindest einen Einspeisers, des zumindest einen abzusichernden Betriebsmittels und/oder des zumindest einen überwachten Betriebsmittels, sowie insbesondere einer (entsprechenden) Feldtechnikvorrichtung. Vorzugsweise ist die Entlastungsmatrix dabei spezifisch eingerichtet für eine Wechselwirkung, z. B. (geänderte) Leistungsänderungen und/oder Leistungsverteilungen, im Fehlerfall, insbesondere zwischen dem zumindest einen Einspeiser, dem zumindest einen abzusichernden Betriebsmittel und/oder dem zumindest einen überwachten Betriebsmittel. Beispielsweise kann in einem Fehlerfall ein überwachtes Betriebsmittel ausfallen (oder sein Verhalten bzw. sich selbst verändern), wodurch das abzusichernde Betriebsmittel, insbesondere durch den zumindest einen Einspeiser (bzw. dessen geändertes Verhalten) und/oder eine Wechselwirkung über das Verteilnetz, eine (zu hohe) Leistung aufnehmen würde. Dabei kann die Entlastungsmatrix, insbesondere für diesen spezifischen Fehlerfall, eine (optimierte) Entlastungsmaßnahme aufweisen. Dabei kann eine Entlastungsmaßnahme dazu eingerichtet sein, das zumindest eine abzusichernde Betriebsmittel zu schützen. Zusätzlich (oder alternativ) kann eine Entlastungsmaßnahme die Leistung optimieren (insbesondere maximieren), wodurch beispielsweise das Verteilnetz, das abzusichernde Betriebsmittel und/oder der zumindest eine Einspeiser (trotz Fehlerfall) eine optimierte (maximale) Leistung bereitstellen, insbesondere ohne Schäden und/oder Folgeauslösungen (wie z. B. Notabschaltungen anderer Betriebsmittel) zu verursachen. Bevorzugt kann die Entlastungsmatrix in Abhängigkeit von dem zumindest einen Parameter erstellt werden. Dadurch kann der zumindest eine Parameter des Einspeisers beim Erstellen berücksichtigt werden. Das Erstellen kann dabei eine (oder mehrere bzw. wiederholte) Netzsicherheitsrechnung und/oder Ausfallvariantenberechnung umfassen. Diese kann berechnen und/oder simulieren, ob es zu einer Überlastung von dem zumindest einen abzusichernden Betriebsmittel in Abhängigkeit, insbesondere in Folge, eines Fehlerfalls kommen würde. Dadurch kann eine entsprechende Entlastungsmatrix, insbesondere Entlastungsmaßnahme, bereitgestellt werden. Dadurch kann eine besonders sichere und/oder umfassende Entlastungsmatrix bereitgestellt werden und/oder ein besonders sicheres Betreiben ermöglicht werden. Es kann vorgesehen sein, dass (initial) eine Entlastungsmatrix bereitgestellt bzw. verwendet wird, welche durch bekannte Verfahren ermittelt wurde, z. B. durch ein Schutz-Mitnahme-System. Das Schutz-Mitnahme-System kann beispielsweise hierzu beispielsweise eine Netzberechnung, welche nicht im laufenden Betrieb durchgeführt wird, (offline Netzberechnung) verwenden.

Das Betreiben des zumindest einen Einspeisers in Abhängigkeit von der Entlastungsmatrix, kann dabei zusätzlich (oder alternativ) ein Betreiben des zumindest einen abzusichernden Betriebsmittels und/oder einer Feldtechnikvorrichtung (des zumindest einen abzusichernden Betriebsmittels) umfassen. Zusätzlich (oder alternativ) kann das Betreiben ein Betreiben des zumindest einen überwachten Betriebsmittels und/oder einer Feldtechnikvorrichtung (des zumindest einen überwachten Betriebsmittels) umfassen. So kann es vorgesehen sein, dass insbesondere in einem Fehlerfall, in Abhängigkeit von der Entlastungsmatrix zumindest eines der folgenden Merkmale durchgeführt wird:
- ein (zumindest temporäres) Abschalten
   i. des zumindest einen Einspeisers,
   ii. des zumindest einen überwachten Betriebsmittels, und/oder
   iii. des zumindest einen abzusichernden Betriebsmittels
- ein Reduzieren der (Einspeise-) Leistung des zumindest einen Einspeisers,
- ein geändertes Betreiben
   i. des zumindest einen Einspeisers, beispielsweise ein Entkoppeln (z. B. Trennen einer Verbindung) des zumindest einen Einspeisers von dem Verteilnetz,
   ii. des zumindest einen überwachten Betriebsmittels, beispielsweise ein Entkoppeln (z. B. Trennen einer Verbindung) des zumindest einen überwachten Betriebsmittels von dem Verteilnetz, vorzugweise von dem zumindest einen abzusichernden Betriebsmittel, und/oder
   iii. des zumindest einen abzusichernden Betriebsmittels, beispielsweise ein Entkoppeln (z. B. Trennen einer Verbindung) des zumindest einen abzusichernden Betriebsmittels von dem Verteilnetz, vorzugweise von dem zumindest einen überwachten Betriebsmittel, und/oder
- ein Hinzuschalten, Wegschalten und/oder Verändern (insbesondere Erhöhen oder Verringern) der (Einspeise-) Leistung zumindest eines weiteren Einspeisers, wodurch vorzugweise ein Leistungsfluss oder Leistungsflüsse verändert werden, um vorteilhafterweise einen Schutz des zumindest einen abzusichernden Betriebsmittels bereitzustellen.

Dabei kann in Abhängigkeit von der Entlastungsmatrix ein schnelleres, besser angepasstes und/oder zuverlässigeres (insbesondere sicheres) Betreiben ermöglicht werden. Zusätzlich (oder alternativ) kann dabei der zumindest eine Einspeiser mit einer (vergleichsweise) höheren, insbesondere maximalen, Leistung bzw. Auslastung betrieben werden. Dabei kann das Betreiben vorzugsweise unter Berücksichtigung eines Sicherheitsstandards durchgeführt werden. Beispielsweise kann das Betreiben eine (n-1)-Sicherheit umfassen. Das Betreiben kann dabei bevorzugt von dem Netzleitsystem und/oder zumindest einer Feldtechnikvorrichtung durchgeführt werden. Dabei kann das Betreiben durch ein Netzleitsystem vorteilhafterweise zentral, robust und/oder überwacht erfolgen. Das Betreiben, insbesondere in einem Fehlerfall, kann dabei (alternativ oder zusätzlich) durch zumindest eine Feldtechnikvorrichtung (insbesondere des zumindest einen überwachten Betriebsmittels und/oder abzusichernden Betriebsmittels) durchgeführt werden. Dies kann vorteilhafterweise ein verbessertes, insbesondere schnelleres, Betreiben, z. B. in einem Fehlerfall ermöglichen. Eine Feldtechnikvorrichtung kann dabei bevorzugt (örtlich) nahe an einem Betriebsmittel angeordnet sein. Dadurch kann sich eine schnelle bzw. kurze Reaktionszeit ergeben. Somit kann die Sicherheit erhöht werden, z. B. durch ein schnelles Abschalten.

Im Rahmen der Erfindung kann es von Vorteil sein, dass das Bestimmen des zumindest einen Parameters des zumindest einen Einspeisers durch ein Bereitstellen (vorzugsweise durch das jeweilige Betriebsmittel bzw. den zumindest einen Einspeiser), insbesondere an ein

Netzleitsystem, und/oder durch einen Sensor durchgeführt wird, insbesondere umfassend zumindest eines (oder zwei oder drei oder vier) der folgenden Merkmale
- ein Bestimmen von zumindest einer Leistung bzw. einem Leistungsfluss zwischen dem zumindest einen Einspeiser und dem zumindest einen überwachten Betriebsmittel, und/oder
- ein Bestimmen von zumindest einer Leistung bzw. einem Leistungsfluss zwischen dem zumindest einen Einspeiser oder dem zumindest einen überwachten Betriebsmittel und einem mit diesem verbundenen Versorgungsnetz, und/oder
- ein Bestimmen von zumindest einer Leistung bzw. einem Leistungsfluss zwischen dem zumindest einen Einspeiser oder dem zumindest einen überwachten Betriebsmittel, und einem weiteren Einspeiser, dem zumindest einen abzusichernden Betriebsmittel, und/oder zumindest einem weiteren Betriebsmittel, und/oder
- ein Bestimmen von zumindest einem Prognoseparameter, welcher spezifisch ist für ein prognostiziertes Verhalten des zumindest einen Parameters des zumindest einen Einspeisers, insbesondere in einem (bestimmten bzw. spezifischen) Fehlerfall (z. B. einem spontanen Trennen der elektrischen Verbindung).

In Abhängigkeit von dem zumindest einen Parameter kann ein Erstellen, insbesondere ein Berechnen und/oder Simulieren, einer (dynamisch anpassbaren) Entlastungsmatrix durchgeführt werden. Bevorzugt kann durch das Bestimmen des zumindest einen Parameters, ein Leistungsfluss, vorzugsweise für das gesamte elektrische Versorgungsnetz und/oder das Verteilnetz ermittelt werden, beispielsweise für einen (Normal-) Betrieb. Es kann alternativ oder zusätzlich auch vorgesehen sein, dass dies (aktuelle) Parameter und/oder für die Parameter diese spezifischen Messwerte umfasst, beispielsweise (aktuelle) Einspeiseleistung, Wirkleistung, Verlustleistung und/oder Blindleistung. Es kann vorgesehen sein, dies durch einen oder mehrere Sensoren zu messen, welche insbesondere mit den elektrischen Verbindungen, Einspeisern, Betriebsmitteln und/oder Feldtechnikvorrichtungen verbunden sind.

Dabei kann ein Prognoseparameter beispielsweise durch ein Redispatch-Verfahren ermittelt werden. Dabei kann ein Redispatch-Verfahren eine Berechnung und/oder Anforderung zur Anpassung der Einspeiseleistung, insbesondere der Wirkleistungseinspeisung, des zumindest einen Einspeisers umfassen, wodurch vorzugsweise auftretende (Leistungs-) Engpässe vermieden werden und/oder verringert werden.

Vorzugsweise kann ein Prognoseparameter (zumindest teilweise) das Verhalten des zumindest einen Parameters des zumindest einen Einspeisers in einem Fehlerfall umfassen, insbesondere simulieren. Dadurch kann beispielsweise die Wechselwirkung zu dem zumindest einen abzusichernden und/oder überwachten Betriebsmittel simuliert werden. In Abhängigkeit davon kann das Erstellen der Entlastungsmatrix, z. B. im Rahmen der Ausfallvariantenberechnung, durchgeführt werden.

Im Rahmen der Erfindung ist es denkbar, dass das Erstellen einer Entlastungsmatrix für das zumindest eine abzusichernde Betriebsmittel das Erstellen einer Entlastungsmatrix umfasst, welche dazu eingerichtet ist in einem Fehlerfall, insbesondere des zumindest einen Einspeisers und/oder des überwachten Betriebsmittels, das zumindest eine abzusichernde Betriebsmittel zu schützen, wobei insbesondere die Entlastungsmatrix zumindest eine Entlastungsmaßnahme aufweist, welche vorzugsweise spezifisch ist für eine Ausfallvariante (insbesondere einen bestimmten Fehlerfall, beispielsweise ermittelt durch bzw. im Rahmen einer Ausfallvariantenbetrachtung und/oder eines Redispatch-Verfahrens), beispielsweise den Ausfall (z. B. teilweisen oder vollständigen Defekt) des zumindest einen Einspeisers und/oder (bevorzugt) des zumindest einen überwachten Betriebsmittels, wobei vorzugweise eine Entlastungsmaßnahme ein Reduzieren (insbesondere ein (dynamisch) anpassbares Reduzieren und/oder spezifisch für einen (bestimmten) Fehlerfall) einer Leistung des Einspeisers umfasst. Dabei kann ein Fehlerfall beispielsweise einen, insbesondere teilweise oder vollständigen, Ausfall, Defekt und/oder eine Überlast aufweisen.

Es kann im Rahmen der Erfindung vorgesehen sein, dass das Erstellen einer Entlastungsmatrix für das zumindest eine abzusichernde Betriebsmittel, das Berechnen zumindest einer Ausfallvariante, insbesondere umfassend das Lösen (zumindest) eines Optimierungsproblems, in Abhängigkeit von dem zumindest einen überwachten Betriebsmittel, dem zumindest einen abzusichernden Betriebsmittels, dem Einspeiser, dem zumindest einen Parameter, und/oder zumindest einem Grenzwert, welcher für das zumindest eine abzusichernde Betriebsmittel, insbesondere für den zumindest einen Parameter, spezifisch ist, wodurch vorzugsweise die Entlastungsmatrix, insbesondere zumindest eine Entlastungsmaßnahme der Entlastungsmatrix, in Abhängigkeit von der Ausfallvariante festgelegt wird.

Besonders bevorzugt kann es sein, wenn das Berechnen einer Ausfallvariante (spezifisch) für das zumindest eine überwachte Betriebsmittel (vorzugsweise für jedes einzelne) durchgeführt wird. Vorzugsweise werden unterschiedliche Ausfallvarianten (wie folgt) separat und/oder aufeinanderfolgend berechnet. Mit anderen Worten kann berechnet und/oder simuliert werden, vorzugsweise durch eine Ausfallvariantenbetrachtung, wie das Verteilnetz, insbesondere das zumindest eine überwachte Betriebsmittel (bevorzugt), das abzusichernde Betriebsmittel und/oder der zumindest eine Einspeiser in einem Fehlerfall reagieren bzw. sich verhalten. Dabei kann eine (spezifische) Ausfallvariantenberechnung eine Simulation eines Zustands (und/oder einer Reaktion) des Verteilnetzes bzw. der Betriebsmittel und/oder Einspeiser umfassen, in einem Fehlerfall, insbesondere, wenn das zumindest eine überwachte Betriebsmittel einen Fehlerfall aufweist (z. B. einen Defekt). Dabei kann es vorgesehen sein, die (gegenseitige) Wechselwirkung zu berechnen und/oder zu simulieren. Dadurch kann (im Vorfeld) bereits genau abgeschätzt werden, wie der zumindest eine Einspeiser (insbesondere der zumindest eine Parameter), das zumindest eine überwachte Betriebsmittel und/oder, das zumindest eine abzusichernde Betriebsmittel sich verhält. Es kann dabei vorgesehen sein, den oder die Leistungsflüsse, im Vorfeld zu berechnen. In Abhängigkeit davon kann die Entlastungsmatrix ermittelt werden.

Ferner ist denkbar, dass zumindest eine Sensitivität des zumindest einen Einspeisers berücksichtigt wird, insbesondere, wenn der zumindest eine Einspeiser, auf erneuerbaren Energien, z. B. Windkraftanlage, basiert. Dabei kann die Sensitivität im Rahmen einer Sensitivitätsanalyse ermittelt werden. Vorteilhafterweise können dadurch auch Einspeiser mit einer (zeitlich und/oder leistungsabhängig) variierenden Sensitivität in der Entlastungsmatrix (anpassbar) berücksichtigt werden, beispielsweise durch genaueres Berechnen der Ausfallvarianten und/oder ein (dynamisches) Anpassen der Entlastungsmatrix. Weiterhin kann eine auf das zumindest eine abzusichernde Betriebsmittel wirkende Einspeiseleistung berechnet werden, welche insbesondere für einen Normalbetrieb und/oder einen Fehlerfall simuliert werden kann. Alternativ oder zusätzlich kann ein Bestimmen einer Entlastungsleistung (z. B. für zumindest einen Fehlerfall) für das zumindest eine überwachte Betriebsmittel und/oder das zumindest eine abzusichernde Betriebsmittel durchgeführt werden, insbesondere in Abhängigkeit von (zumutbaren bzw. maximalen) Grenzwerten, insbesondere Leistungsgrenzwerten. Eine Entlastungsleistung kann dabei eine für zumindest einen Fehlerfall benötigte Leistung des Betriebsmittels aufweisen, insbesondere in Abhängigkeit von Grenzwerten des Betriebsmittels für Strom und/oder Spannung. Eine Entlastungsleistung kann beispielsweise eine Leistungsreduktion umfassen. Weiterhin kann die Entlastungsmatrix, insbesondere eine (kurative) Entlastungsmaßnahme für zumindest einen Einspeiser, vorzugsweise mehrere Einspeiser, durchgeführt werden. Dabei kann für jede Ausfallvariante eine Entlastungsmaßnahme ermittelt werden. Es kann bevorzugt vorgesehen sein, (erst) eine Ausfallvariante zu berechnen, (dann) zumindest ein Optimierungsproblem zu lösen, und/oder (anschließend) die Entlastungsmatrix eingerichtet für den zumindest einen Fehlerfall zu erstellen. Es kann dabei (jeweils) ein Optimierungsproblem in Abhängigkeit von dem Erfassen erfolgen, insbesondere den erfassten Betriebsmitteln und/oder Einspeisern. Dabei kann das Optimierungsproblem ein lineares und/oder gemischt ganzzahliges Optimierungsproblem bzw. Gleichungssystem umfassen. Dadurch kann eine optimierte Leistung(sverteilung) und/oder Sicherheit im Fehlerfall bzw. für jede Ausfallvariante ermittelt werden. Beispielsweise kann das Optimierungsproblem eine (bzw. alle) Einspeiseleistungen berechnen, insbesondere in Abhängigkeit von Nebenbedingungen wie Blindleistung(en), Spannung(en) und/oder Frequenzstabilität. Alternativ oder zusätzlich kann beispielsweise ein Aufsummieren der wirkenden (Einspeise-) Leistung(en) für jeden Einspeiser, insbesondere für Cluster von Einspeisern, berechnet werden, insbesondere solange bis eine (summierte) Entlastungsleistung (mindestens) ausgeglichen ist. Dabei kann es vorgesehen sein, primär bzw. vorrangig, insbesondere mit absteigender Relevanz, (hohe) Sensitivitäten zu berücksichtigen, zufällige Einspeiser und/oder gleichberechtigte Einspeiser festzulegen und/oder zu verwenden. Alternativ oder zusätzlich kann es vorgesehen sein, dass ein Prüfen von (möglichen) Folgeauslösungen, z. B. von Schutzschaltungen, im Fehlerfall durchgeführt bzw. berechnet wird. Beispielsweise kann eine Entlastungsmaßnahme eine Leistungsreduktion eines Einspeisers umfassen. Es kann sich jedoch ergeben, dass, insbesondere durch ein Prüfen, z. B. ein Simulieren des Fehlerfalls, zumindest einen Leistungsfluss ergibt, der zumindest zu einer (weiteren) Folgeauslösung führen würde. Dies kann verhindert werden, indem ein erneutes und/oder optimiertes Berechnen durchgeführt wird, beispielsweise unter Verwendung einer (weiteren) Randbedingung, wie z. B. eines reduzierten Grenzwerts, welcher vorzugsweise nicht zu einer derartigen Folgeauslösung führt. Die Entlastungsmatrix kann demnach zumindest eine, vorzugsweise eine Vielzahl an, Entlastungsmaßnahm(en) aufweisen. Diese sind bevorzugt dafür eingerichtet, einen optimalen Schutz, bei gleichzeitiger maximaler Leistungsausbeute zu ermöglichen.

Es ist ferner denkbar, dass das Betreiben ein Übertragen, insbesondere durch das Netzleitsystem, der Entlastungsmatrix an das zumindest eine abzusichernde Betriebsmittel, insbesondere eine Feldtechnikvorrichtung des abzusichernden Betriebsmittels, umfasst, und/oder, dass das Betreiben ein Speichern der Entlastungsmatrix durch das zumindest eine abzusichernde Betriebsmittel, insbesondere eine Feldtechnikvorrichtung des abzusichernden Betriebsmittels, umfasst.

Dabei kann die Feldtechnikvorrichtung das Betreiben, insbesondere das Umsetzen bzw. Anwenden der Entlastungsmatrix, bzw. einer Entlastungsmaßnahme, im Fehlerfall direkt implementieren. Es kann vorgesehen sein, dass eine Feldtechnikvorrichtung zumindest ein, oder zumindest zwei oder mehrere, Betriebsmittel betreibt bzw. ansteuert.

Das Betreiben kann dabei ein normales bzw. geplantes Betreiben umfassen, wobei insbesondere die Entlastungsmatrix (erst) gespeichert wird und/oder im bzw. für den Fehlerfall implementiert werden kann. Dadurch kann vorteilhafterweise das zumindest eine abzusichernde Betriebsmittel geschützt werden. Gleichzeitig kann dadurch die Leistung, insbesondere eine Entlastungsleistung, optimiert werden. Es kann alternativ oder zusätzlich auch vorgesehen sein, dass das Betreiben in Abhängigkeit von dem zumindest einen Parameter erfolgt, insbesondere zumindest einem (aktuellen) Messwert, welcher für den zumindest einen Parameter spezifisch ist.

Es ist ferner denkbar, dass das Betreiben ein Übertragen, insbesondere durch das Netzleitsystem, der Entlastungsmatrix an das zumindest eine überwachte Betriebsmittel, insbesondere eine Feldtechnikvorrichtung des überwachten Betriebsmittels, und/oder den zumindest einen Einspeiser, umfasst, und/oder dass das Betreiben ein Speichern der Entlastungsmatrix durch das zumindest eine überwachte Betriebsmittel, insbesondere eine Feldtechnikvorrichtung des überwachten Betriebsmittels, und/oder, den zumindest einen Einspeiser, umfasst.

Auch ist es denkbar, dass das Betreiben ein Feststellen eines Fehlerfalls umfasst, aufweisend
- ein positives Feststellen eines Fehlerfalls, wenn der zumindest eine Parameter (und/oder ein Messwert, welcher vorzugsweise für den zumindest einen Parameter spezifisch ist, z. B. ein Leistungsfluss) einen Grenzwert überschreitet, woraufhin insbesondere ein Anwenden der Entlastungsmatrix durchgeführt wird, und/oder
- ein negatives Feststellen eines Fehlerfalls, wenn der zumindest eine Parameter (und/oder ein Messwert, welcher vorzugsweise für den zumindest einen Parameter spezifisch ist, z. B. ein Leistungsfluss) einen Grenzwert nicht überschreitet.

Bevorzugt kann der Fehlerfall beim überwachten Betriebsmittel erkannt werden, und insbesondere dann zur Reduktion der Einspeiseleistung an den Einspeiser und/oder ein Betriebsmittel zwischen Einspeiser und abgesichertem Betriebsmittel übermittelt werden. Dabei kann ein Feststellen beispielsweise ein Messen über einen Sensor, insbesondere des zumindest einen Einspeisers, umfassen. Dieser kann dazu eingerichtet sein, den zumindest einen Paramater und/oder einen aktuellen Messwert (für den zumindest einen Parameter), z. B. eine aktuelle (Einspeise-) Leistung zu messen. Diese kann mit zumindest einem Grenzwert verglichen werden, um vorzugsweise ein positives oder negatives Feststellen eines Fehlerfalls zu detektieren. Es kann auch vorgesehen sein, dass ein Grenzwert einen, für einen spezifischen Fehlerfall, typischen Verlauf umfasst, und das Vergleichen ein Abgleichen des (z. B. durch den Sensor) ermittelten Verlaufs der Messwerte umfasst. Dadurch kann vorteilhafterweise ein (sich anbahnender) Fehlerfall, früher erkannt werden. Dies kann die Sicherheit (weiter) erhöhen. Ein Messwert kann dabei, insbesondere über eine jeweilige Datenverbindung, an das Netzleitsystem und/oder zumindest eine Feldtechnikvorrichtung (des überwachten und/oder abzusichernden Betriebsmittels) übermittelt werden, was vorteilhafterweise ein schnelles bzw. schnelleres Reagieren ermöglichen kann. Ein Messwert kann insbesondere ein Signal, insbesondere ein binäres Signal (Binärsignal) umfassen. Ein Anwenden kann dabei vorzugsweise ein zumindest teilweises Umsetzen der Entlastungsmatrix, insbesondere einer Entlastungsmaßnahme, umfassen. Besonders bevorzugt kann es sein, wenn zumindest eine Feldtechnikvorrichtung, der zumindest eine Einspeiser, zumindest eine Feldtechnikvorrichtung des zumindest einen überwachten Betriebsmittels, und/oder eine mit dem zumindest einen abzusichernden Betriebsmittel verbundene Feldtechnikvorrichtung, die Entlastungsmatrix, aufweist, insbesondere von dem Netzleitsystem übermittelt bekommen (z. B. über eine Datenverbindung), und vorzugsweise speichert. Dadurch kann vorteilhafterweise die Feldtechnikvorrichtung und/oder der zumindest eine Einspeiser, in einem Fehlerfall direkt und/oder schnell(er) ein Betreiben in Abhängigkeit von der Entlastungsmatrix durchführen, beispielsweise eine Reduktion der Leistung. Dabei kann eine Feldtechnikvorrichtung ein mit ihr über eine Datenverbindung verbundenes Betriebsmittel ansteuern, beispielsweise durch ein Steuersignal, z. B. ein Abschaltsignal und/oder Trennsignal (zur elektrischen Trennung). Demnach kann es vorgesehen sein, dass das Verfahren, insbesondere das Betreiben zumindest teilweise durch zumindest eine Feldtechnikvorrichtung implementiert wird. Dabei kann es besonders bevorzugt sein, wenn die zumindest eine Feldtechnikvorrichtung mit dem zumindest einen Einspeiser, insbesondere einem Sensor des zumindest einen Einspeisers, über eine Datenverbindung (direkt) verbunden ist. Dadurch kann die Feldtechnikvorrichtung ein Betreiben bzw. ein Anwenden der (hinterlegten) Entlastungsmatrix direkt und/oder schnell(er) durchführen, insbesondere im Vergleich zu einem Fall, in welchem (nur) eine indirekte Datenverbindung besteht, z. B. wenn das Netzleitsystem (oder eine andere Steuereinheit) zwischengeschaltet ist. Dadurch kann die Geschwindigkeit und/oder Sicherheit erhöht werden. Zudem kann / können die Ausfallwahrscheinlichkeit und/oder (Reparatur-) Kosten reduziert werden.

Im Rahmen der Erfindung ist es optional möglich, dass die Entlastungsmatrix, insbesondere durch Wiederholen des Erfassens, des Bestimmens, des Ermittelns und/oder des Betreibens, dynamisch anpassbar ausgestaltet ist, wodurch vorzugsweise in einem Fehlerfall der zumindest eine Einspeiser eine maximale Einspeiseleistung aufweist und (gleichzeitig), das zumindest eine überwachte Betriebsmittel (bevorzugt) und/oder abzusichernde Betriebsmittel, geschützt wird.

Dabei kann eine maximale Einspeiseleistung eine (unter diesen Umständen bzw. im Fehlerfall) maximal mögliche und/oder optimierte Einspeiseleistung umfassen.

Dabei kann insbesondere das Erfassen, das Erfassen neu angeschlossener und/oder geänderter (überwachter und/oder abzusichernder) Betriebsmittel und/oder Einspeiser umfassen. Demnach kann beispielsweise eine Ausfallvariantenrechnung bzw. Ausfallvariantenbetrachtung diese (nach Erfassen ebenfalls) umfassen. Demnach kann die Entlastungsmatrix (dynamisch) anpassbar sein, insbesondere bezüglich Änderungen des Verteilnetzes, der Einspeiser, und/oder der Verschaltung bzw. Schaltzuständen. Auch können (weitere) Sensoren bei dem Erfassen erkannt werden, welche vorteilhafterweise ein noch genaueres Erstellen einer Entlastungsmatrix ermöglichen. Es kann auch vorgesehen sein, dass die Entlastungsmatrix in Abhängigkeit von geänderten Grenzwerten und/oder des zumindest einen Parameters (dynamisch) angepasst wird. Es kann vorzugsweise vorgesehen sein, dass, insbesondere, wenn eine Anpassung erfolgt ist, z. B. feststellbar durch das Netzleitsystem über ein Vergleichen mit einer früheren bzw. historischen Entlastungsmatrix, die (neue) Entlastungsmatrix, vorzugsweise im Rahmen des Betreibens, an den zumindest einen Einspeiser, das zumindest eine überwachte Betriebsmittel, das zumindest eine abzusichernde Betriebsmittel und/oder eine (jeweilige) Feldtechnikvorrichtung übertragen wird. Dadurch kann örtlich (lokal) nahe und/oder (reaktions-) schneller die (neue) Entlastungsmatrix angewendet werden. Weiterhin kann eine genaue und/oder zuverlässige Anpassung an den (gegenwärtigen, bzw. Ist-) Zustand des Verteilnetzes und/oder des elektrischen Versorgungsnetzes erfolgen.

Die obenstehende Aufgabe wird gemäß einem zweiten Aspekt gelöst durch ein erfindungsgemäßes Computerprogrammprodukt, umfassend Befehle, die bei der Ausführung des Computerprogrammprodukts durch einen Computer diesen veranlassen, das Verfahren gemäß dem ersten Aspekt zu implementieren.

Damit ergeben sich in Bezug auf ein erfindungsgemäßes Computerprogrammprodukt gemäß dem zweiten Aspekt die gleichen Vorteile, wie sie bereits in Bezug auf ein erfindungsgemäßes Verfahren gemäß dem ersten Aspekt beschrieben worden sind.

Die obenstehende Aufgabe wird gemäß einem dritten Aspekt gelöst durch einen erfindungsgemäßen computerlesbaren Datenträger, in welchem Befehle hinterlegt sind, die bei der Ausführung durch einen Computer diesen veranlassen, das Verfahren gemäß dem ersten Aspekt durchzuführen.

Damit ergeben sich in Bezug auf einen erfindungsgemäßen computerlesbaren Datenträger gemäß dem dritten Aspekt die gleichen Vorteile, wie sie bereits in Bezug auf ein erfindungsgemäßes Verfahren gemäß dem ersten Aspekt und/oder ein erfindungsgemäßes Computerprogrammprodukt gemäß dem zweiten Aspekt beschrieben worden sind.

Die obenstehende Aufgabe wird gemäß einem vierten Aspekt gelöst durch eine erfindungsgemäße Steuereinheit, aufweisend eine Recheneinheit und eine Speichereinheit, in welcher Befehle hinterlegt sind, welche bei zumindest teilweiser Ausführung durch die Recheneinheit ein Verfahren gemäß dem ersten Aspekt durchführt.

Dabei kann die Steuereinheit physisch und/oder (zumindest teilweise) virtuell ausgestaltet sein, wobei insbesondere eine (oder mehrere) virtuelle Steuereinheiten bzw. Maschinen verwendet werden. Beispielsweise kann die Steuereinheit zumindest teilweise in einer Cloudarchitektur ausgebildet und/oder ausgeführt werden.

Damit ergeben sich in Bezug auf eine erfindungsgemäße Steuereinheit gemäß dem vierten Aspekt die gleichen Vorteile, wie sie bereits in Bezug auf ein erfindungsgemäßes Verfahren gemäß dem ersten Aspekt und/oder ein erfindungsgemäßes Computerprogrammprodukt gemäß dem zweiten Aspekt und/oder einen erfindungsgemäßen computerlesbaren Datenträger gemäß dem dritten Aspekt beschrieben worden sind.

Die obenstehende Aufgabe wird gemäß einem fünften Aspekt gelöst durch ein erfindungsgemäßes Netzleitsystem umfassend eine Steuereinheit gemäß dem vierten Aspekt, wobei das Netzleitsystem mit zumindest einem überwachten Betriebsmittel, zumindest einem abzusichernden Betriebsmittel und zumindest einem Einspeiser verbindbar (insbesondere verbunden) ist.

Dabei kann das Verteilnetz zumindest ein (überwachtes und/oder abzusicherndes) Betriebsmittel und/oder eine (entsprechende) Feldtechnikvorrichtung umfassen. Der zumindest eine Einspeiser kann dabei mit dem Verteilnetz (elektrisch) verbunden sein, und bevorzugt eine (Einspeise-) Leistung in das Verteilnetz einspeisen.

Damit ergeben sich in Bezug auf ein erfindungsgemäßes Netzleitsystem gemäß dem fünften Aspekt die gleichen Vorteile, wie sie bereits in Bezug auf ein erfindungsgemäßes Verfahren gemäß dem ersten Aspekt und/oder ein erfindungsgemäßes Computerprogrammprodukt gemäß dem zweiten Aspekt und/oder einen erfindungsgemäßen computerlesbaren Datenträger gemäß dem dritten Aspekt und/oder eine erfindungsgemäße Steuereinheit gemäß dem vierten Aspekt beschrieben worden sind.

Die obenstehende Aufgabe wird gemäß einem sechsten Aspekt gelöst durch ein erfindungsgemäßes elektrisches Versorgungsnetz umfassend ein Netzleitsystem gemäß dem fünften Aspekt, zumindest ein überwachtes Betriebsmittel, zumindest ein abzusicherndes Betriebsmittel und zumindest einen Einspeiser, wobei der zumindest eine Einspeiser mit dem zumindest einen abzusichernden Betriebsmittel verbindbar (insbesondere verbunden) ist.

Damit ergeben sich in Bezug auf ein erfindungsgemäßes elektrisches Versorgungsnetz gemäß dem sechsten Aspekt die gleichen Vorteile, wie sie bereits in Bezug auf ein erfindungsgemäßes Verfahren gemäß dem ersten Aspekt und/oder ein erfindungsgemäßes Computerprogrammprodukt gemäß dem zweiten Aspekt und/oder einen erfindungsgemäßen computerlesbaren Datenträger gemäß dem dritten Aspekt und/oder eine erfindungsgemäße Steuereinheit gemäß dem vierten Aspekt und/oder ein erfindungsgemäßes Netzleitsystem gemäß dem fünften Aspekt beschrieben worden sind.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Dabei zeigt
- Fig. 1: ein Verfahren
- Fig. 2: ein elektrisches Versorgungsnetz

In den nachfolgenden Figuren werden für die gleichen technischen Merkmale, auch von unterschiedlichen Ausführungsbeispielen, die identischen Bezugszeichen verwendet.

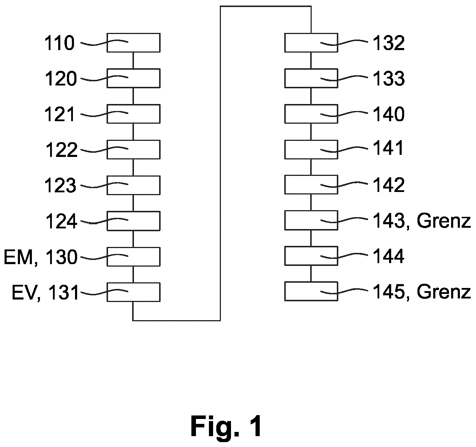

Figur 1 zeigt dabei ein Verfahren zum Betreiben eines elektrischen Versorgungsnetzes 1000, aufweisend
- Erfassen 110, insbesondere durch ein Netzleitsystem 200, zumindest eines überwachten Betriebsmittels 10, zumindest eines abzusichernden Betriebsmittels 20 und zumindest eines Einspeisers 100, wobei der zumindest eine Einspeiser 100 mit dem zumindest einen abzusichernden Betriebsmittel 20 verbunden ist,
- Bestimmen 120, insbesondere durch das Netzleitsystem 200, zumindest eines Parameters Par des zumindest einen Einspeisers 100,
- Erstellen 130, insbesondere durch das Netzleitsystem 200, einer Entlastungsmatrix EM für das zumindest eine abzusichernde Betriebsmittel 20, in Abhängigkeit von dem zumindest einen Parameter Par,
- Betreiben 140 des zumindest einen Einspeisers 100 in Abhängigkeit von der Entlastungsmatrix EM.

Dabei kann es vorgesehen sein, dass das Bestimmen 120 des zumindest einen Parameters Par des zumindest einen Einspeisers 100 durch ein Bereitstellen, insbesondere an ein Netzleitsystem 200, oder durch einen Sensor 102 durchgeführt wird, insbesondere umfassend zumindest eines der folgenden Merkmale
- ein Bestimmen 121 von zumindest einem Leistungsfluss zwischen dem zumindest einen Einspeiser 100 und dem zumindest einen überwachten Betriebsmittel 10,
- ein Bestimmen 122 von zumindest einem Leistungsfluss zwischen dem zumindest einen Einspeiser 100 oder dem zumindest einen überwachten Betriebsmittel 10 und einem mit diesem verbundenen Verteilnetz 300,
- ein Bestimmen 123 von zumindest einem Leistungsfluss zwischen dem zumindest einen Einspeiser 100 oder dem zumindest einen überwachten Betriebsmittel 10, und einem weiteren Einspeiser 100.1, 100.2, dem zumindest einen abzusichernden Betriebsmittel 20, und/oder zumindest einem weiteren Betriebsmittel 10.1, 20.1, und/oder
- ein Bestimmen 124 von zumindest einem Prognoseparameter, welcher spezifisch ist für ein prognostiziertes Verhalten des zumindest einen Parameters Par des zumindest einen Einspeisers 100 in einem Fehlerfall.

Es kann auch vorgesehen sein, dass das Erstellen 130 einer Entlastungsmatrix EM für das zumindest eine abzusichernde Betriebsmittel 20 das Erstellen 131 einer Entlastungsmatrix EM umfasst, welche dazu eingerichtet ist, in einem Fehlerfall, insbesondere des zumindest einen Einspeisers 100 und/oder des überwachten Betriebsmittels 10, das zumindest eine abzusichernde Betriebsmittel 20 zu schützen, wobei insbesondere die Entlastungsmatrix EM zumindest eine Entlastungsmaßnahme EV aufweist, welche vorzugsweise spezifisch ist für eine Ausfallvariante, beispielsweise den Ausfall des zumindest einen Einspeisers 100 und/oder des zumindest einen überwachten Betriebsmittels 10, wobei vorzugweise eine Entlastungsmaßnahme EV ein Reduzieren einer Leistung des Einspeisers 100 umfasst.

Dabei kann es vorgesehen sein, dass das Betreiben 140 ein Übertragen 141, insbesondere durch das Netzleitsystem 200, der Entlastungsmatrix EM an das zumindest eine abzusichernde Betriebsmittel 20, insbesondere eine Feldtechnikvorrichtung 30.2 des abzusichernden Betriebsmittels 20, umfasst, und/oder, dass das Betreiben 140 ein Speichern 142 der Entlastungsmatrix EM durch das zumindest eine abzusichernde Betriebsmittel 20, insbesondere eine Feldtechnikvorrichtung 30.2 des abzusichernden Betriebsmittels 20, umfasst.

Weiterhin ist es denkbar, dass das Betreiben 140 ein Feststellen 142 eines Fehlerfalls umfasst, aufweisend
- ein positives Feststellen 143 eines Fehlerfalls, wenn der zumindest eine Parameter Par einen Grenzwert Grenz überschreitet, woraufhin insbesondere ein Anwenden 144 der Entlastungsmatrix EM durchgeführt wird, und/oder
- ein negatives Feststellen 145 eines Fehlerfalls, wenn der zumindest eine Parameter Par einen Grenzwert Grenz nicht überschreitet.

Auch kann es vorgesehen sein, dass die Entlastungsmatrix EM, insbesondere durch Wiederholen des Erfassens 110, des Bestimmens 120, des Ermittelns 130 und/oder des Betreibens 140, dynamisch anpassbar ausgestaltet ist, wodurch vorzugsweise in einem Fehlerfall der zumindest eine Einspeiser 100 eine maximale Einspeiseleistung aufweist und das zumindest eine überwachte Betriebsmittel 10 geschützt wird.

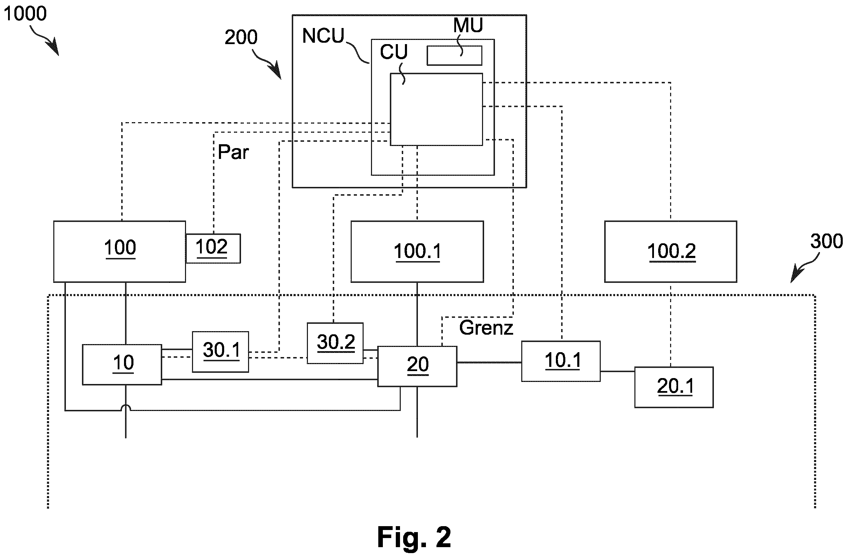

Figur 2 zeigt (beispielhaft) ein elektrisches Versorgungsnetz 1000, welches ein Verteilnetz 300 aufweisen kann. Alternativ oder zusätzlich kann das Verteilnetz 300 auch ein Übertragungsnetz aufweisen und/oder sein. Das Verteilnetz 300, insbesondere die Betriebsmittel 10, 10.1, 20, 20.1, können dabei mit anderen elektrische Netzen und/oder Verbrauchern verbunden sein (nicht dargestellt, angedeutet durch die nach unten führenden Linien unterhalb der Betriebsmittel). Zudem kann das elektrische Versorgungsnetz 1000 ein Netzleitsystem 200 aufweisen. Das Netzleitsystem 200 kann eine Steuereinheit NCU umfassen (bzw. darstellen), insbesondere aufweisend eine Recheneinheit CU und/oder eine Speichereinheit MU. Das elektrische Versorgungsnetz 1000 kann zumindest einen Einspeiser 100, 100.1, 100.2 aufweisen, insbesondere auch weitere Einspeiser 100.1, 100.2, z.B. einen ersten weiteren Einspeiser 100.1 und/oder einen zweiten weiteren Einspeiser 100.2. Ein Einspeiser 100, 100.1, 100.2, z.B. ein Windkraftwerk, kann dazu eingerichtet sein, eine elektrische Leistung, vorzugsweise an das Verteilnetz 300, bereitzustellen, insbesondere an ein (elektrisch verbundenes) Betriebsmittel 10, 10.1, 20, 20.1, z. B. einen Transformator und/oder eine Umspannvorrichtung. Beispielsweise kann zumindest ein Einspeiser 100 über eine elektrische Verbindung mit einem überwachten Betriebsmittel 10 verbunden sein.

Elektrische Verbindungen können dabei mit durchgehenden Strichen dargestellt sein. Zudem kann der zumindest eine Einspeiser 100 (auch direkt) mit einem abzusichernden Betriebsmittel 20 über eine elektrische Verbindung verbunden sein. Alternativ kann es vorgesehen sein, dass das abzusichernde Betriebsmittel 20 indirekt in einer Wirkverbindung zu dem zumindest einen Einspeiser 100 steht, z. B. durch das Verteilnetz 300. Vorzugsweise kann das abzusichernde Betriebsmittel 20, und/oder ein weiteres abzusicherndes Betriebsmittel 20.1, durch das erfindungsgemäße Verfahren geschützt werden. Es kann auch ein weiterer (erster) Einspeiser 100.1 vorgesehen sein, welcher beispielhaft mit dem abzusichernden Betriebsmittel 20 verbunden ist. Ein (abzusicherndes und/oder überwachtes) Betriebsmittel 10, 10.1, 20, 20.1 kann beispielhaft jedoch auch mit keinem Einspeiser 100, 100.1, 100.2 direkt verbunden sein, wie beispielsweise das überwachte Betriebsmittel 10.1. Die Betriebsmittel 10, 10.1, 20, 20.1 können direkt oder indirekt miteinander (elektrisch) verbunden sein. Beispielhaft ist das abzusichernde Betriebsmittel 20 mit dem überwachten Betriebsmittel 10, und insbesondere mit dem weiteren überwachten Betriebsmittel 10.1 verbunden. Dabei kann beispielsweise das weitere abzusichernde Betriebsmittel 20.1 indirekt mit dem überwachten Betriebsmittel 10 verbunden sein, insbesondere über das abzusichernde Betriebsmittel 20 und/oder das weitere überwachte Betriebsmittel 10.1. Insofern kann auch eine Wechselwirkung zwischen nicht direkt verbundenen Bestandteilen (Betriebsmitteln und/oder Einspeisern) erfolgen. Das zumindest eine überwachte Betriebsmittel 10 kann dabei mit einer (ersten) Feldtechnikvorrichtung 30.1 elektrisch verbunden sein und/oder datenkommunizierend verbunden sein. Gestrichelte Linien können dabei eine Datenverbindung darstellen. Das zumindest eine abzusichernde Betriebsmittel 20 kann dabei mit einer (zweiten) Feldtechnikvorrichtung 30.2 elektrisch verbunden sein und/oder datenkommunizierend verbunden sein. Dadurch kann die (jeweilige) Feldtechnikvorrichtung 30.1, 30.2 das überwachte Betriebsmittel 10 bzw. das abzusichernde Betriebsmittel 20 ansteuern und/oder überwachen. Es kann vorgesehen sein, dass die erste Feldtechnikvorrichtung 30.1 und die zweite Feldtechnikvorrichtung 30.2 (ebenfalls) durch eine Datenverbindung datenkommunizierend verbunden sind. Dies kann beispielsweise ein Übertragen einer Entlastungsmatrix von der einen zu der anderen Feldtechnikvorrichtung 30.1, 30.2 ermöglichen (z.B. als Redundanz zu einer Übertragung von dem Netzleitsystem 200. Der zumindest eine Einspeiser 100 kann einen Sensor 102 aufweisen, welcher beispielsweise zum Bestimmen 120 zumindest eines Parameters Par des zumindest einen Einspeisers 100 eingerichtet sein kann. Beispielsweise kann dies eine (Einspeise-) Leistung umfassen. Der zumindest eine Parameter Par kann an das Netzleitsystem 200 übermittelt werden. Das Netzleitsystem 200, die Steuereinheit NCU, und/oder die Recheneinheit CU, kann dabei eine (jeweilige) Datenverbindung aufweisen zu
- dem zumindest einen Einspeiser 100, 100.1, 100.2
- dem Sensor 102,
- der (ersten und/oder zweiten) Feldtechnikvorrichtung 30.1, 30.2,
- dem überwachten Betriebsmittel 10,
- dem weiteren überwachten Betriebsmittel 10.1,
- dem abzusichernden Betriebsmittel 20, z.B. zum Übertragen eines Grenzwerts Grenz, und/oder
- dem weiteren abzusichernden Betriebsmittel 20.1.

### Bezugszeichenliste

- 10: überwachtes Betriebsmittel
- 10.1: weiteres überwachtes Betriebsmittel
- 20: abzusicherndes Betriebsmittel
- 20.1: weiteres abzusicherndes Betriebsmittel
- 30.1: Feldtechnikvorrichtung (eines überwachten Betriebsmittels)
- 30.2: Feldtechnikvorrichtung (eines abzusichernden Betriebsmittels)

- 100: (elektrischer) Einspeiser
- 100.1, 100.2: weiterer Einspeiser
- 102: Sensor
- 200: Netzleitsystem
- 300: Verteilnetz

- 1000: Versorgungsnetz

- NCU: Steuereinheit
- CU: Recheneinheit
- MU: Speichereinheit

- 110: Erfassen von abzusichernden & überwachten Betriebsmittel sowie Einspeiser
- 120: Bestimmen von zumindest einem Parameter des zumindest einen Einspeisers
- 121: Bestimmen von Leistungsfluss zwischen Einspeiser und überwachten Betriebsmittel
- 122: Bestimmen von Leistungsfluss zwischen Einspeiser oder überwachten Betriebsmittel und einem Verteilnetz
- 123: Bestimmen von Leistungsfluss zwischen dem Einspeiser oder überwachten Betriebsmittel und einem weiteren Einspeiser, abzusichernden Betriebsmittel und/oder weiteren Betriebsmittel
- 124: Bestimmen von zumindest einem Prognoseparameter
- 130: Erstellen einer Entlastungsmatrix
- 131: Erstellen einer Entlastungsmatrix eingerichtet für einen Fehlerfall
- 132: Berechnen zumindest einer Ausfallvariante
- 133: Lösen eines Optimierungsproblems
- 140: Betreiben des zumindest einen Einspeisers
- 141: Übertragen der Entlastungsmatrix
- 142: Speichern der Entlastungsmatrix
- 143: positives Feststellen
- 144: Anwenden der Entlastungsmatrix
- 145: negatives Feststellen

- Par: Parameter
- EM: Entlastungsmatrix
- EV: Entlastungsmaßnahme
- Grenz: Grenzwert

## Patentansprüche

1. Verfahren zum Betreiben eines elektrischen Versorgungsnetzes (1000), aufweisend
- Erfassen (110), insbesondere durch ein Netzleitsystem (200), zumindest eines überwachten Betriebsmittels (10), zumindest eines abzusichernden Betriebsmittels (20) und zumindest eines Einspeisers (100), wobei der zumindest eine Einspeiser (100) mit dem zumindest einen abzusichernden Betriebsmittel (20) verbunden ist,
- Bestimmen (120), insbesondere durch das Netzleitsystem (200), zumindest eines Parameters (Par) des zumindest einen Einspeisers (100),
- Erstellen (130), insbesondere durch das Netzleitsystem (200), einer Entlastungsmatrix (EM) für das zumindest eine abzusichernde Betriebsmittel (20), in Abhängigkeit von dem zumindest einen Parameter (Par),
- Betreiben (140) des zumindest einen Einspeisers (100) in Abhängigkeit von der Entlastungsmatrix (EM).

2. Verfahren nach Anspruch 1,
**dadurch gekennzeichnet,**
**dass** das Bestimmen (120) des zumindest einen Parameters (Par) des zumindest einen Einspeisers (100) durch ein Bereitstellen, insbesondere an ein Netzleitsystem (200), oder durch einen Sensor (102) durchgeführt wird, insbesondere umfassend zumindest eines der folgenden Merkmale
- ein Bestimmen (121) von zumindest einem Leistungsfluss zwischen dem zumindest einen Einspeiser (100) und dem zumindest einen überwachten Betriebsmittel (10),
- ein Bestimmen (122) von zumindest einem Leistungsfluss zwischen dem zumindest einen Einspeiser (100) oder dem zumindest einen überwachten Betriebsmittel (10) und einem mit diesem verbundenen Versorgungsnetz (1000),
- ein Bestimmen (123) von zumindest einem Leistungsfluss zwischen dem zumindest einen Einspeiser (100) oder dem zumindest einen überwachten Betriebsmittel (10), und einem weiteren Einspeiser (100.1, 100.2), dem zumindest einen abzusichernden Betriebsmittel (20), und/oder zumindest einem weiteren Betriebsmittel (10.1, 20.1), und/oder
- ein Bestimmen (124) von zumindest einem Prognoseparameter, welcher spezifisch ist für ein prognostiziertes Verhalten des zumindest einen Parameters (Par) des zumindest einen Einspeisers (100), insbesondere in einem Fehlerfall.

3. Verfahren nach Anspruch 2,
**dadurch gekennzeichnet,**
**dass** der Prognoseparameter durch ein Redispatch-Verfahren ermittelt wird, wobei das Redispatch-Verfahren insbesondere eine Berechnung und/oder Anforderung zur Anpassung einer Einspeiseleistung, vorzugsweise einer Wirkeinspeiseleistung, des zumindest einen Einspeisers (100) umfasst.

4. Verfahren nach einem der vorhergehenden Ansprüche,
**dadurch gekennzeichnet,**
**dass** das Erstellen (130) einer Entlastungsmatrix (EM) für das zumindest eine abzusichernde Betriebsmittel (20) das Erstellen (131) einer Entlastungsmatrix (EM) umfasst, welche dazu eingerichtet ist in einem Fehlerfall, insbesondere des zumindest einen Einspeisers (100) und/oder des überwachten Betriebsmittels (10), das zumindest eine abzusichernde Betriebsmittel (20) zu schützen, wobei insbesondere die Entlastungsmatrix (EM) zumindest eine Entlastungsmaßnahme (EV) aufweist, welche vorzugsweise spezifisch ist für eine Ausfallvariante, beispielsweise den Ausfall des zumindest einen Einspeisers (100) und/oder des zumindest einen überwachten Betriebsmittels (10), wobei vorzugweise eine Entlastungsmaßnahme (EV) ein Reduzieren einer Leistung des Einspeisers (100) umfasst.

5. Verfahren nach Anspruch 4,
**dadurch gekennzeichnet,**
**dass** bei dem Einstellen (130) einer Entlastungsmatrix (EM) zumindest eine Sensitivität des zumindest einen Einspeisers (100) berücksichtigt wird, wobei die Sensitivität insbesondere durch eine Sensitivitätsanalyse ermittelt wird.

6. Verfahren nach einem der vorhergehenden Ansprüche,
**dadurch gekennzeichnet,**
**dass** das Erstellen (130) einer Entlastungsmatrix (EM) für das zumindest eine abzusichernde Betriebsmittel (20), das Berechnen (132) zumindest einer Ausfallvariante, insbesondere umfassend das Lösen (133) eines Optimierungsproblems, in Abhängigkeit von dem zumindest einen überwachten Betriebsmittel (10), dem zumindest einen abzusichernden Betriebsmittels (20), dem Einspeiser (100), dem zumindest einen Parameter (Par), und/oder zumindest einem Grenzwert (Grenz) welcher für das zumindest eine abzusichernde Betriebsmittel (20), insbesondere für den zumindest einen Parameter (Par), spezifisch ist, wodurch vorzugsweise die Entlastungsmatrix, insbesondere zumindest eine Entlastungsmaßnahme (EV) der Entlastungsmatrix (EM), in Abhängigkeit von der Ausfallvariante festgelegt wird.

7. Verfahren nach einem der vorhergehenden Ansprüche,
**dadurch gekennzeichnet,**
**dass** das Betreiben (140) ein Übertragen (141), insbesondere durch das Netzleitsystem (200), der Entlastungsmatrix (EM) an das zumindest eine abzusichernde Betriebsmittel (20), insbesondere eine Feldtechnikvorrichtung (30.2) des abzusichernden Betriebsmittels (20), umfasst, und/oder
**dass** das Betreiben (140) ein Speichern (142) der Entlastungsmatrix (EM) durch das zumindest eine abzusichernde Betriebsmittel (20), insbesondere eine Feldtechnikvorrichtung (30.2) des abzusichernden Betriebsmittels (20), umfasst.

8. Verfahren nach einem der vorhergehenden Ansprüche,
**dadurch gekennzeichnet,**
**dass** das Betreiben (140) ein Feststellen (142) eines Fehlerfalls umfasst, aufweisend
- ein positives Feststellen (143) eines Fehlerfalls, wenn der zumindest eine Parameter (Par) einen Grenzwert (Grenz) überschreitet, woraufhin insbesondere ein Anwenden (144) der Entlastungsmatrix (EM) durchgeführt wird, und/oder
- ein negatives Feststellen (145) eines Fehlerfalls, wenn der zumindest eine Parameter (Par) einen Grenzwert (Grenz) nicht überschreitet.

9. Verfahren nach einem der vorhergehenden Ansprüche,
**dadurch gekennzeichnet,**
**dass** die Entlastungsmatrix (EM), insbesondere durch Wiederholen des Erfassens (110), des Bestimmens (120), des Ermittelns (130) und/oder des Betreibens (140), dynamisch anpassbar ausgestaltet ist, wodurch vorzugsweise in einem Fehlerfall der zumindest eine Einspeiser (100) eine maximale Einspeiseleistung aufweist und das zumindest eine überwachte Betriebsmittel (10) und/oder abzusichernde Betriebsmittel (20) geschützt wird.

10. Verfahren nach einem der vorhergehenden Ansprüche,
**dadurch gekennzeichnet,**
**dass** das Betreiben (140) des zumindest einen Einspeisers (100) in Abhängigkeit von der Entlastungsmatrix (EM) zusätzlich ein Betreiben des zumindest einen abzusichernden Betriebsmittels (20) und/oder einer Feldtechnikvorrichtung (30.2) des zumindest einen abzusichernden Betriebsmittels (20) umfasst, und/oder
**dass** das Betreiben (140) des zumindest einen Einspeisers (100) in Abhängigkeit von der Entlastungsmatrix (EM) zusätzlich ein Betreiben des zumindest einen überwachten Betriebsmittels (10) und/oder einer Feldtechnikvorrichtung (30.1) des zumindest einen überwachten Betriebsmittels (10) umfasst.

11. Computerprogrammprodukt, umfassend Befehle, die bei der Ausführung des Computerprogrammprodukts durch einen Computer diesen veranlassen, das Verfahren nach einem der vorhergehenden Ansprüche zu implementieren.

12. Computerlesbarer Datenträger, in welchem Befehle hinterlegt sind, die bei der Ausführung
durch einen Computer diesen veranlassen, das Verfahren nach einem der vorhergehenden Ansprüche durchzuführen.

13. Steuereinheit (NCU), aufweisend eine Recheneinheit (CU) und eine Speichereinheit (MU), in welcher Befehle hinterlegt sind, welche bei zumindest teilweiser Ausführung durch die Recheneinheit (CU) ein Verfahren nach einem der vorhergehenden Ansprüche durchführt.

14. Netzleitsystem (200) umfassend eine Steuereinheit nach dem vorhergehenden Anspruch,
wobei das Netzleitsystem (200) mit zumindest einem überwachten Betriebsmittel (10), zumindest einem abzusichernden Betriebsmittel (20) und zumindest einem Einspeiser (100) verbindbar ist.

15. Elektrisches Versorgungsnetz (1000) umfassend ein Netzleitsystem (200) nach dem vorhergehenden Anspruch, zumindest ein überwachtes Betriebsmittel (10), zumindest ein abzusicherndes Betriebsmittel (20) und zumindest einen Einspeiser (100), wobei der zumindest eine Einspeiser (100) mit dem zumindest einen abzusichernden Betriebsmittel (20) verbindbar ist.
